Europäisches Patentamt

European Patent Office

Office européen des brevets

(19)

(11) Numéro de publication : **0 340 076 B1**

(12)

# FASCICULE DE BREVET EUROPEEN

(45) Date de publication du fascicule du brevet :
**04.11.92 Bulletin 92/45**

(51) Int. Cl.⁵ : **B60R 9/04**

(21) Numéro de dépôt : **89401070.1**

(22) Date de dépôt : **18.04.89**

(54) **Appareil de manutention et de chargement d'objets allongés tels que des échelles sur le toit d'un véhicule.**

(30) Priorité : **25.04.88 FR 8805463**

(43) Date de publication de la demande :
**02.11.89 Bulletin 89/44**

(45) Mention de la délivrance du brevet :
**04.11.92 Bulletin 92/45**

(84) Etats contractants désignés :
**BE CH DE ES FR GB IT LI LU NL SE**

(56) Documents cités :
**DE-U- 7 922 468**
**DE-U- 7 934 167**
**DE-U- 8 327 842**
**FR-A- 2 556 706**

(56) Documents cités :
**FR-A- 2 587 691**
**FR-A- 2 600 954**
**FR-A- 2 606 344**
**GB-A- 2 118 501**
**US-A- 4 175 905**

(73) Titulaire : **ATELIERS SIBILLE ET CIE**
**R.N. 7 Sud B.P. 196 Malataverne**
**F-26205 Montélimar Cédex (FR)**

(72) Inventeur : **Geay, Michel**
**8 bis Chemin Saillans**
**F-26200 Montélimar (FR)**

(74) Mandataire : **Martin, Jean-Paul et al**
**c/o CABINET LAVOIX 2, Place d'Estienne d'Orves**
**F-75441 Paris Cedex 09 (FR)**

EP 0 340 076 B1

## Description

La présente invention concerne un appareil de manutention et de chargement d'objets allongés sur le toit d'un véhicule automobile, plus particulièrement du genre camionnette ou fourgonnette.

Le brevet français FR-A-2 556 706 de la demanderesse décrit un appareil de ce type, comprenant des glissières adaptées pour être fixées aux extrémités avant et arrière du toit et s'étendant transversalement jusqu'au niveau d'au moins une des deux parois latérales du véhicule. Des liens souples constitués par exemple par des sangles, prennent appui sur les glissières, et peuvent s'enrouler autour d'un axe fixé longitudinalement au toit, grâce à des moyens d'entraînement de cet axe en rotation (treuil manoeuvré par une tringle manuelle située à l'arrière du véhicule). Des bras constituant les supports des objets allongés, en particulier des échelles, sont fixés aux extrémités des liens souples, dont les extrémités sont reliées par une entretoise rigide.

Cet appareil donne satisfaction sauf lorsque le chargement doit être effectué alors que le véhicule est en stationnement sur une voie inclinée, soit longitudinalement, soit transversalement. En effet les supports et les liens souples s'écartent alors par gravité de leur position normale, ce qui complique les opérations de chargement. De plus, l'entretoise de liaison, située au niveau des extrémités inférieures des supports des objets, s'avère gênante dans les cas où une porte latérale est prévue sur le véhicule.

On connaît également par le brevet français (publié le 13.05.1988 et donc ne faisant pas partie de l'état de la technique selon l'Article 54(2) CBE) FR-A 2 606 344 un appareil de ce type dans lequel les supports d'objets sont solidaires de chariots montés coulissants sur des tiroirs rigides pouvant eux-mêmes coulisser sur les glissières. Ces dernières s'étendent en surplomb le long des parois latérales du véhicule, de sorte que les chariots portés par ces glissières se trouvent malencontreusement en porte-à-faux en position basse. De plus, l'encombrement latéral de cet appareil est très gênant.

L'invention a pour but de réaliser un appareil de manutention et de chargement d'objets allongés, ne présentant pas ces inconvénients.

Suivant l'invention, les glissières s'étendent transversalement jusqu'au niveau de l'une au moins des parois latérales du véhicule, les parties terminales des glissières opposées à l'axe de rotation sont munies de crochets présentant des becs recourbés vers le haut, une barre longitudinale rigide relie les extrémités des tiroirs situées du côté de l'axe de rotation, et les extrémités de cette barre peuvent s'engager dans les becs d'accrochage de la barre, afin de retenir les tiroirs et les chariots suspendus le long de la paroi latérale du véhicule en position basse d'attente.

L'encombrement latéral de l'appareil est réduit du fait que les glissières ne s'étendent pas le long des parois du véhicule, et les crochets permettent de retenir les tiroirs et les chariots en position basse d'attente.

Par ailleurs, grâce à la rigidité des tiroirs de support des chariots, on s'affranchit de la gène provoquée par la gravité sur les liens souples de l'appareillage antérieur.

De plus, le fait de disposer l'entretoise ou barre de liaison à la partie supérieure des tiroirs mobiles présente l'avantage de dégager la porte latérale éventuelle du véhicule.

Suivant une particularité de l'invention, deux liens souples sont associés à chaque glissière, à savoir un premier lien souple dont une extrémité est attachée au chariot correspondant et un second lien souple plus court, dont une extrémité est attachée à la barre de liaison, et ces deux liens s'enroulent sur des tambours respectifs dont les diamètres sont choisis afin d'assurer aux deux liens des vitesses d'enroulement et de déroulement synchronisées.

Grâce à ces quatre liens souples au total, l'effort à fournir sur les liens pour hisser les tiroirs et les chariots de leur position basse à leur position haute sur les glissières est considérablement plus faible que celui qu'il faudrait déployer avec les seuls liens attachés aux chariots.

L'invention apparaîtra au cours de la description qui va suivre, faite en référence aux dessins annexés qui en illustrent une forme de réalisation à titre d'exemple non limitatif.

La figure 1 est une vue en perspective d'une forme de réalisation d'un appareil de manutention et de chargement selon l'invention, monté sur le toit d'un vehicule du type camionnette, et dont les tiroirs et les chariots sont en position basse d'attente.

La figure 2 est une vue en élévation avec arrachements partiels de l'appareil de la Fig. 1, prise entre deux glissières.

La figure 2A est une vue en élévation partielle à échelle agrandie d'un détail de la Fig.2.

La figure 3 est une vue analogue à la Fig. 2 montrant le chariot en position relevée sur son tiroir de support, ce dernier étant toujours en position basse d'attente.

La figure 4 est une vue en élévation de l'appareil au début du basculement des tiroirs et des chariots sur les crochets des glissières.

La figure 5 est une vue mi-coupe longitudinale mi-élévation d'une glissière et du tiroir ainsi que du chariot associé, représentés en cours de mise en place sur la glissière.

La figure 6 est une vue analogue à la Fig. 5 montrant le tiroir et son chariot en position de chargement, verrouillés sur la glissière.

La figure 7 est une vue mi-coupe transversale mi-élévation, à échelle agrandie, d'un chariot et de son tiroir en appui sur la glissière associée.

La figure 8 est une vue en élévation d'un dispositif de verrouillage automatique du treuil d'entraînement de l'axe rotatif lorsque les tiroirs sont relevés sur les glissières.

La figure 9 est une vue analogue à la Fig. 8 montrant le dispositif déverrouillé par introduction du crochet d'une tringle de manoeuvre du treuil.

La figure 10 est une vue en élévation d'une autre forme de réalisation du dispositif de verrouillage automatique du treuil.

La figure 11 est une vue analogue à la Fig. 4 d'une seconde forme de réalisation de l'appareil de manutention selon l'invention.

La figure 12 est une vue en perspective analogue à la Fig. 1 de la forme de réalisation de la Fig. 11.

L'appareil représenté aux dessins est destiné à la manutention et au chargement d'objets allongés, tels que des échelles, sur le toit 1 d'un véhicule 2, celui-ci étant du type fourgonnette ou camionnette.

Cet appareil comprend, dans l'exemple décrit, deux glissières 3 adaptées pour être fixées aux extrémités avant et arrière du toit 1 et s'étendant transversalement jusqu'au niveau de l'une 4 des deux parois latérales du véhicule 2. L'appareil comporte également plusieurs liens souples constitués ici, pour chaque glissière 3, par deux sangles 5 et 40. Les sangles 5 prennent appui sur les glissières 3 et peuvent s'enrouler autour d'un axe 6 monté longitudinalement sur deux parties fixes 7 solidaires du toit 1. L'agencement des sangles 40 ainsi que leur rôle et celui des sangles 5 seront expliqués plus loin. L'axe 6 peut être entraîné en rotation à partir de l'arrière du véhicule par tout dispositif approprié tel qu'un treuil 10 et une tringle 8 manuelle ou électrique de manoeuvre. Les objets (non représentés), sont disposés sur des supports 9 fixés aux extrémités des liens souples 5 et constitués de manière connue en soi par des bras s'étendant transversalement et dont l'extrémité est relevée.

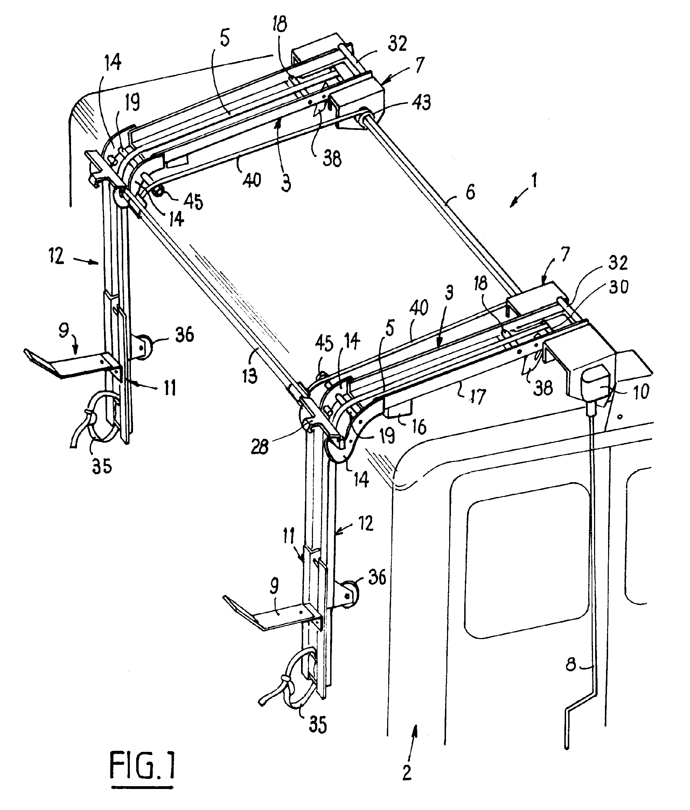

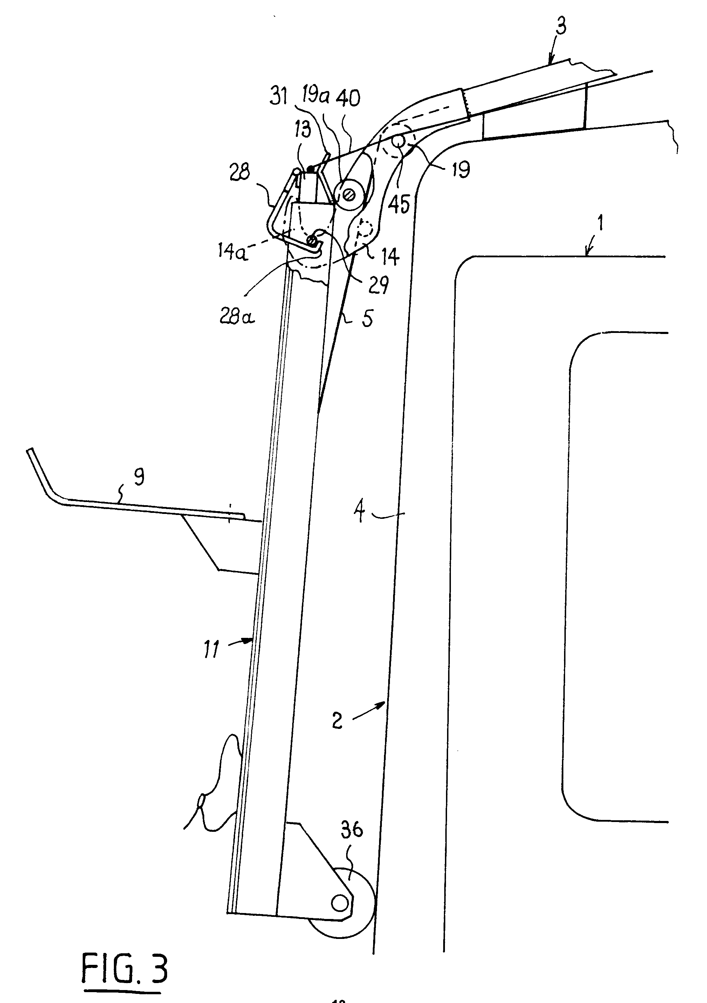

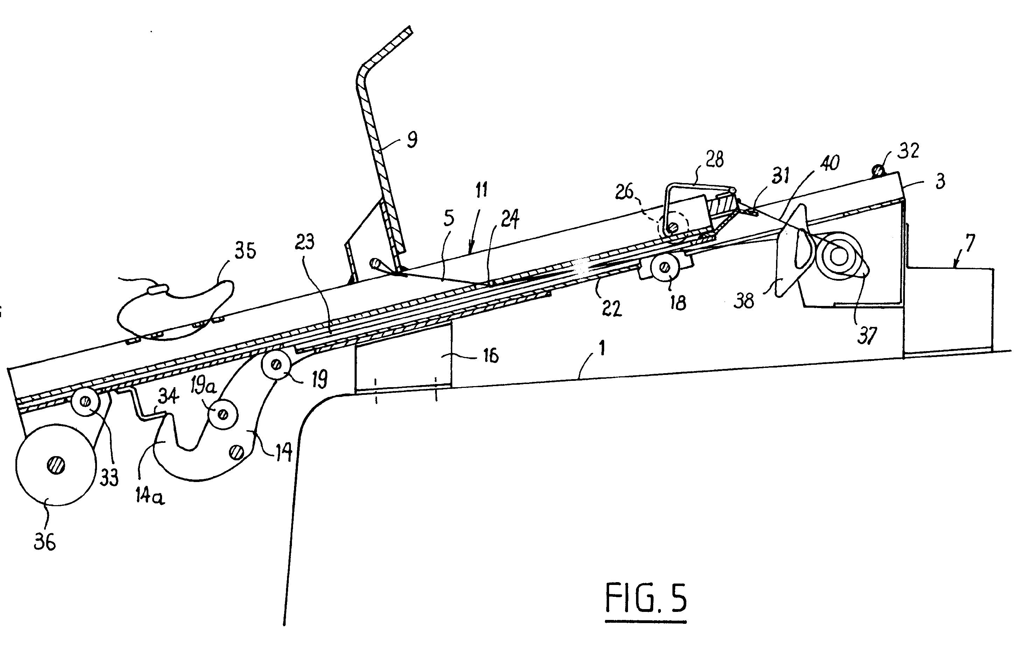

Les supports 9 sont pivotants sur des axes verticaux solidaires de chariots 11 montés coulissants sur des tiroirs rigides 12 pouvant eux-mêmes coulisser sur les glissières correspondantes 3 pour être verrouillés sur celles-ci (Fig.5). Une barre longitudinale rigide 13 relie les extrémités des deux tiroirs 12 situées du côté de l'axe 6, et les parties terminales des glissières 5 opposées à l'axe de rotation 6 sont munies de moyens d'accrochage de la barre 13 afin de retenir les tiroirs 12 et les chariots 11 suspendus le long de la paroi latérale 4 en position basse d'attente. Dans l'exemple décrit, ces moyens d' accrochage sont des crochets 14 présentant des becs 14a recourbés vers le haut, chaque glissière 3 étant ainsi munie de deux crochets terminaux 14 séparés par un intervalle de passage des tiroirs 12 et des chariots 11 correspondants. Dans ces intervalles s'engagent les extrémités de la barre 13 lorsque les tiroirs 12 et les chariots 11 sont suspendus le long de la paroi latérale 4 (Fig.1 et 3), qui peut être protégée par un revêtement plastique ou autre.

Chaque sangle 40 peut s'enrouler autour d'un tambour 43 solidaire de l'axe rotatif 6. Elle glisse de plus sur un galet 45 de renvoi porté par un crochet 14 et son extrémité est attachée à la barre 13, au voisinage des crochets 14. Elle est donc plus courte que la sangle 5 associée à la même glissière 3, et qui s'enroule sur un tambour 44, dont le diamètre est nettement supérieur à celui du tambour 43. En effet le rapport de ces deux diamètres doit être convenablement choisi afin d'assurer la synchronisation des enroulements et déroulements des quatre sangles 5,40, les sangles 5 devant se dérouler plus vite que les sangles 40 en raison de leur plus grande longueur.

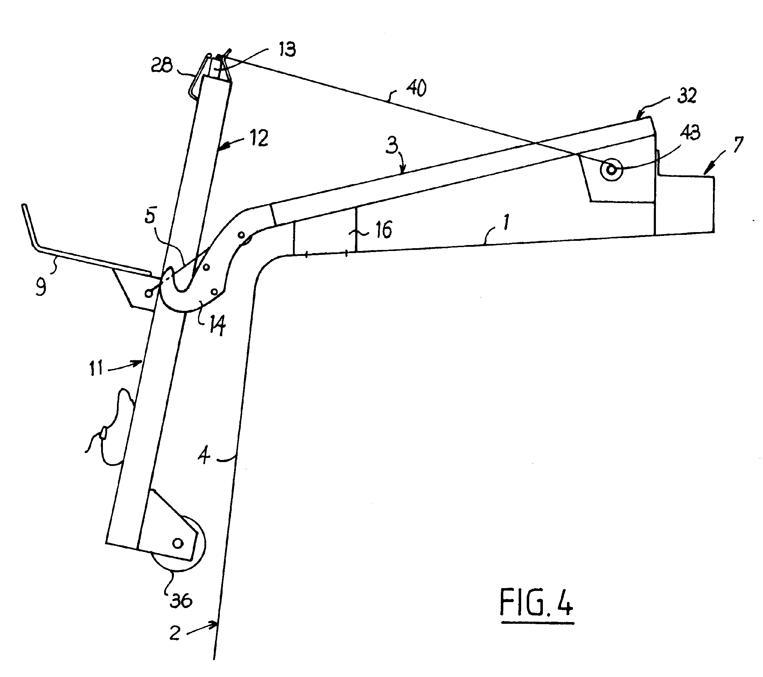

Les sangles 40 ont pour fonction essentiellement de faciliter la remontée sur les glissières 3 du chargement (11,12) avec les objets placés sur les supports 9, et plus précisément son basculement sur les crochets 14 (Fig.4) avec un effort sur la tringle 8 notablement réduit par rapport à celui qui serait nécessaire en l'absence des sangles 40.

Les glissières 3 s'appuient, au voisinage de la paroi 4, sur des pièces 16 fixées au toit 1, et comportent chacune un profilé 17 dont une extrémité est solidarisée avec les crochets correspondants 14, tandis que l'autre extrémité est fixée à la partie 7. Ce profilé 17 a une section en U à l'intérieur de laquelle, au voisinage de son extrémité contigüe à l'axe 6, est monté un galet 18, tandis qu'un second galet 19 est monté entre les crochets 14. Enfin, sensiblement au niveau de l'extrémité des becs 14a, un troisième galet 19a est monté entre les crochets 14.

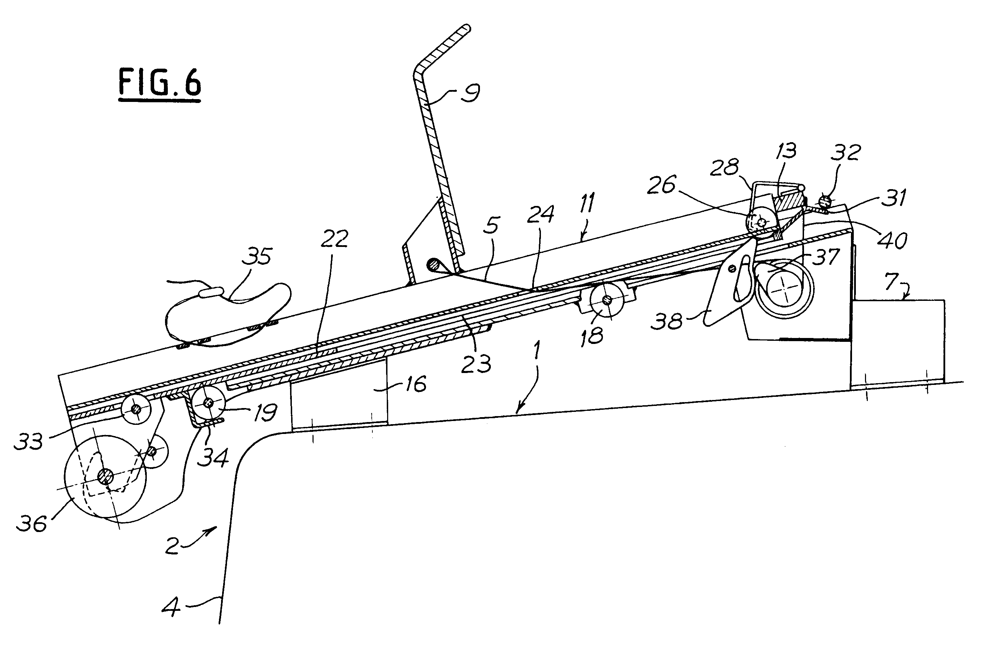

Chaque chariot 12 a en section transversale un profil en deux C 21 ouverts l'un vers l'autre (Fig.6), réunis par un fond 22 percé d'une ouverture allongée 23 de passage de la sangle associée 5 (Fig.5). Cette dernière traverse également une lumière 24 du fond du chariot 11, tandis que son extrémité est attachée de façon connue en soi au support 9.

Les profils en C 21 sont distants l'un de l'autre d'un intervalle suffisant pour permettre avec jeu, d'y recevoir le chariot 11, qui à cet effet peut présenter une section en U à fond 24 dont les branches sont prolongées à angle droit par des rabats 25 pouvant glisser sur les extrémités sous-jacentes 21a des profils en C 21.

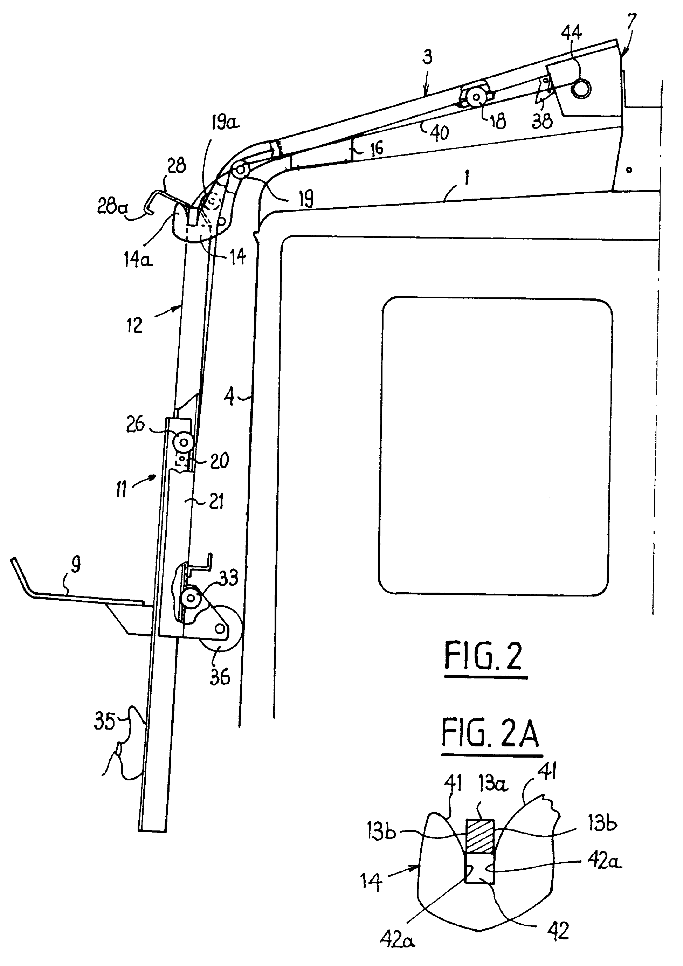

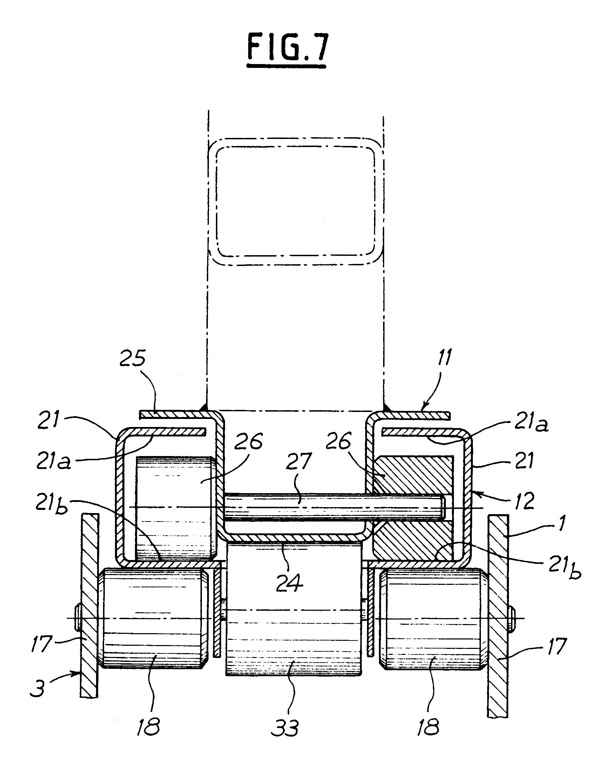

L'appareil comporte des moyens de roulement des chariots 11 sur les tiroirs 12 ainsi que des tiroirs 12 sur les glissières 3, et des butées 20, fixées aux tiroirs 12, pour arrêter les chariots 11 en position basse par rapport aux tiroirs 12 (Fig.2). Les galets 18, 19 et 19a, permettent le roulement des tiroirs 12 sur les glissières 3, les sangles 5 prenant appui sur ces galets lorsque les tiroirs 12 et leurs chariots 11 sont en position basse. Les moyens de roulement ci-dessus comprennent également une paire de galets 26 montés sur un axe 27 traversant l'extrémité supérieure du chariot 11, ces galets 26 s'appuyant sur les branches 21b des profilés 21 opposées à leurs branches 21a (Fig.7). Des galets 33 placés à l'extrémité de chaque glissière 3 à l'opposé des galets 26 permettent, avec ces derniers, aux chariots 11 de coulisser sur les tiroirs 12.

Les extrémités des tiroirs 12 situées du côté de l'axe 6 sont équipées de moyens pour solidariser les tiroirs avec le chariot correspondant 11 avant chaque manoeuvre de montée du tiroir 12 et du chariot 11 sur le toit 1, et pour les désolidariser lorsqu'ils sont rabattus le long de la paroi latérale 4. Dans la réalisation décrite, ces moyens sont des loquets 28 de verrouillage articulés sur les extrémités de la barre de liaison 13, et qui viennent par gravité s'accrocher sur des organes associés solidaires des extrémités supérieures des tiroirs 12, par exemple des barrettes transversales 29 recevant les extrémités recourbées 28a des loquets 28. Les extrémités des becs recourbés 14a des crochets 14 sont agencées pour provoquer le relèvement des loquets 28 lorsque la barre 13 descend à l'intérieur des crochets 14 (Fig.2), et par conséquent le déverrouillage automatique des chariots 11 par rapport aux tiroirs 12 durant une manoeuvre de descente de celui-ci le long de la paroi 4 du véhicule.

L'intérieur des crochets 14 présente en section le profil visible en particulier à la Fig.2A : tout d'abord des rampes 41 extérieures d'accès en V qui permettent l'introduction d'un profil droit 13a à deux plats parallèles 13b formant chaque extrémité de la barre de liaison 13, puis une gorge de fond 42 en U à parois opposées parallèles 42a. Les profils d'extrémité 13a de la barre 13 sont dimensionnés de manière à venir s'engager pratiquement sans jeu dans le fond de la gorge 42.

Les extrémités des tiroirs 12 situées du côté de l'axe de rotation 6 sont munies de pièces de blocage 31 de l'ensemble des tiroirs 12 et des chariots 11 sur les glissières 3 en position chargée (Fig.5). Ces pièces terminales 31 peuvent être coudées comme représenté, de manière qu'en fin de coulissement des tiroirs 12 sur les glissières 3, leurs extrémités viennent s'engager sous des barrettes 32 fixées transversalement aux extrémités supérieures des glissières 3.

Chaque tiroir 12 est pourvu d'une pièce d'arrêt 34 agencée pour venir en butée contre le galet 19 de la glissière 3, lorsque les tiroirs 12 et les chariots 11 sont en position haute verrouillée sur le toit 1 (Fig.6). Enfin, les chariots 11 sont munis de manière connue en soi, d'attaches 35 destinées à retenir les objets accrochés aux supports 9, et les tiroirs 12 sont équipés, à leurs extrémités inférieures, de roulettes 36 d'appui sur la paroi 4 du véhicule.

Les extrémités de l'axe 6 sont munies de tambours 30 à cames 37 (Fig.6) adaptées pour bloquer des crochets de sécurité 38 articulés à l'intérieur des extrémités supérieures des glissières 3. Les crochets 38 sont agencés de manière à basculer sous la poussée des tiroirs 12 et à bloquer ceux-ci en fin de course, en venant s'engager sous les galets 26. Les crochets 38 sont maintenus dans cette position de verrouillage par les cames 37 elles-mêmes maintenues par les sangles 5 et le poids des chariots 11 ainsi que de leurs charges.

L'appareil est enfin pourvu d'un dispositif pour verrouiller automatiquement les moyens d'entraînement de l'axe 6 en rotation, c'est-à-dire le treuil 10 lorsque les tiroirs 12 sont relevés sur les glissières 3 et en fin de course sur celles-ci.

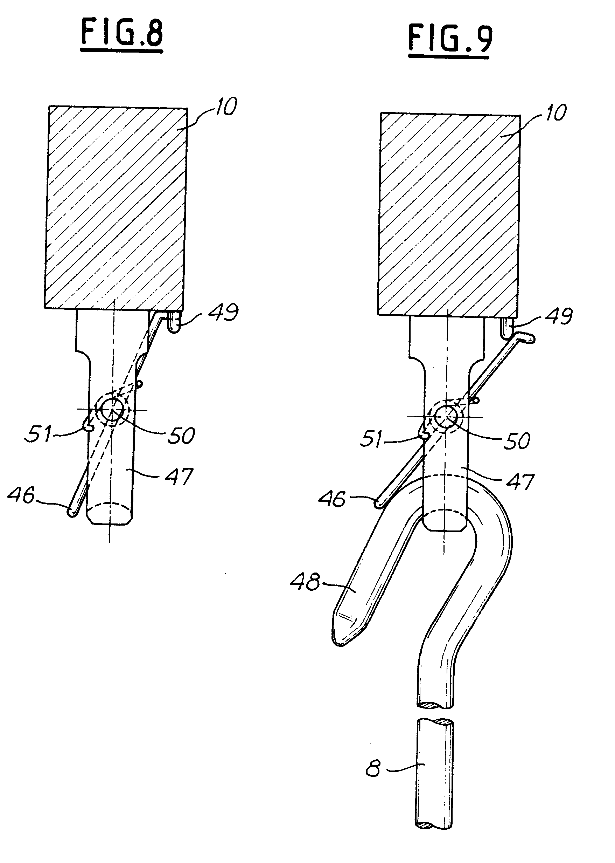

Dans l'exemple des Fig. 8 et 9, ce dispositif comprend ainsi un organe 46 d'arrêt du treuil 10, formé par un papillon monté basculant sur un axe 50 porté par un anneau rotatif 47 du treuil adapté pour recevoir le crochet terminal 48 de la tringle 8. Le boîtier fixe du treuil 10 est muni d'un doigt 49, et en l'absence du crochet 48, l'organe 46 est rappelé élastiquement par un ressort 51 enroulé autour de l'axe 50 dans une position relevée contre le boîtier du treuil 10, où son extrémité peut venir au contact du doigt 49 qui constitue alors une butée empêchant toute rotation de l'anneau 47 solidaire du papillon 46.

Ainsi, lorsque la tringle de manoeuvre 8 n'est pas engagée par son crochet 48 dans l'anneau 47, le ressort 51, dont une extrémité est fixée à l'anneau 47 et l'autre au papillon 46, maintient ce dernier dans une position relevée où il est bloqué en rotation, éventuellement après un pivotement d'au maximum un tour, par le doigt 49 (Fig.8). L'introduction du crochet 48 dans l'anneau 47 provoque le basculement de l'organe 46 et sa libération de la butée 49(Fig.9), ce qui permet d'actionner le treuil 10 par la tringle 8.

L'appareil qui vient d'être décrit est mis en oeuvre de la manière suivante.

En position basse d'attente (Fig.1 et 2), les tiroirs 12 sont accrochés aux crochets 14 par les extrémités de la barre 13, et les loquets 28 sont relevés. Les chariots 11 sont en position basse extrême par rapport aux tiroirs 12, sur lesquels ils sont retenus par les butées 20 recevant les galets 26. Les sangles 5 sont en appui sur les galets 18,19 et 19a.

Lorsque l'utilisateur a placé son chargement, en particulier des échelles, sur les bras de support 9 et fixé celui-ci par les attaches 35, la manoeuvre de remontée de l'ensemble peut commencer, par mise en rotation de l'axe 6 au moyen du treuil 10 et de la tringle 8 et déblocage de l'organe d'arrêt 46.

Les sangles 5 entraînent rapidement vers le haut les chariots 11 dont les galets 26 roulent sur les branches 21b des profils 21. En fin de coulissement des chariots 11, ceux-ci viennent en butée contre la barre 13 entre les crochets 14 puis les sangles 5 continuant à s'enrouler autour de l'axe 6, les tiroirs 12 sont soulevés des crochets 14 avec les chariots 11, ce qui provoque le rabattement des loquets 28 sur les axes 29 et le verrouillage des chariots 11 sur les tiroirs 12 (Fig.3). Jusqu'à ce stade, les sangles 40 ont été enroulées à vide sur l'axe 6 grâce à plusieurs tours morts, n'exerçant aucune traction sur la barre 13. A partir de ce moment, les sangles 40, qui s'enroulent beaucoup plus lentement que les sangles 5, tirent sur la barre 13 et commencent à décoller les roulettes 36 de la paroi 4. Elles transmettent l'effort de remontée de l'ensemble et grâce aux bras de levier entre celle-ci et l'axe de basculement au niveau des crochets 14 (Fig.4), permettent ce basculement des tiroirs 12 sur les glissières 3 avec un effort réduit sur la manivelle 8.

Les tiroirs 12 roulent successivement sur les galets 19a puis sur les galets 19 et les galets 18 (Fig.5), en poursuivant leur coulissement sur les glissières 3. En fin de course (Fig.6), les crochets 38 sont basculés et viennent bloquer les galets 26, tandis que les cames 37 maintiennent les crochets 38 dans cette position de blocage. La traction exercée sur les sangles 5 par les chariots 11 et leur chargement tend à maintenir les cames 37 dans leur position de blocage des crochets 38. En fin de course également, les pièces 31 viennent se placer sous les barrettes 32, ce qui garantit le maintien sur les glissières 3 des tiroirs 12 des chariots 11 et de leur chargement. Le retrait de la manivelle 8 provoque le verrouillage du treuil 10 par l'organe d'arrêt 46.

Pour procéder au déchargement, il suffit de manoeuvrer la tringle 8 dans le sens anti-horaire (Fig.6), afin de provoquer l'effacement des crochets 38 et la libération des tiroirs 12. L'opérateur continue alors à dérouler les sangles 5 et 40, et la mise en place des tiroirs 12 et des chariots 11 le long de la paroi 4 du véhicule s'effectue par les manoeuvres inverses de celles de la séquence ci-dessus. Il convient de noter que lorsque la barre 13 s'engage dans les crochets 14 (Fig.3 et 2) les sangles 40 n'exercent plus d'effort sur la barre et continuent à se dérouler a vide autour de l'axe 6 sur plusieurs tours jusqu'à ce que les tiroirs 12 arrivent en position basse. Lors de la remontée suivante, les sangles 40 s'enroulent donc à nouveau à vide jusqu'à ce que la barre 13 se dégage des crochets 14.

L'appareil selon l'invention présente notamment l'avantage de ne pas gêner l'accès dans le véhicule par une éventuelle porte latérale, grâce au fait que la barre 13 relie les extrémités supérieures des tiroirs 12, et est donc toujours située au-dessus de cette porte latérale.

De plus, grâce à leur rigidité et à la barre de liaison 13, les tiroirs 12 et les chariots 11 restent toujours sensiblement parallèles à la paroi 11 si le véhicule stationne sur une voie en pente.

Enfin l'introduction sans jeu des profils terminaux 13a de la barre de liaison 13 dans les gorges 42 des crochets 14 empêche les tiroirs 12 et les chariots 11 de s'écarter de la paroi 4 lorsque le véhicule stationne sur une voie inclinée latéralement.

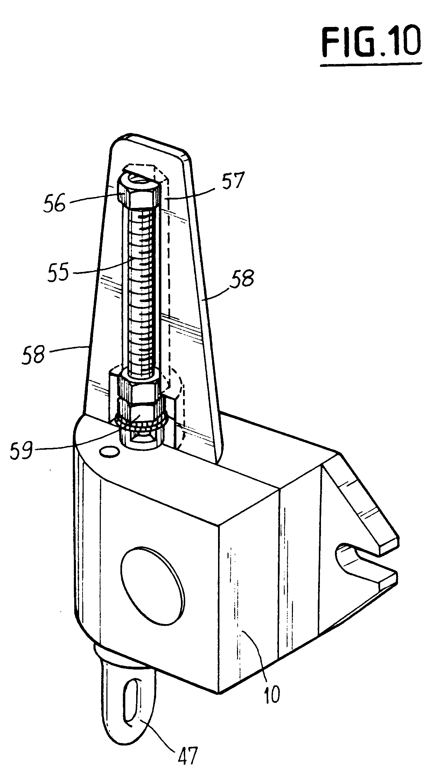

On a représenté à la Fig.10 un autre mode de réalisation du dispositif de verrouillage automatique du treuil 10. Ce dispositif comprend une tige filetée 55 prolongeant l'axe du treuil 10 entraîné par son anneau 47 et solidaire en rotation de cet axe. La tige 55 porte un écrou 56 bloqué en rotation par tout moyen approprié, par exemple par une gaine 57 enveloppant partiellement ou totalement l'écrou 56 et dont la section correspond à celle de cet écrou. Dans l'exemple de réalisation décrit, la gaine 57, supportée par le treuil 10, est assujettie à celui-ci par des joues latérales 58. Sur la base de la tige 55 est vissé un écrou fixe 59.

Lorsque les supports 9 d'échelles sont en position basse, l'écrou mobile 56 est en position haute et en butée contre l'extrémité supérieure de la gaine 57, position dans laquelle il est bloqué ainsi que le treuil 10.

Lorsqu'on actionne le treuil dans le sens qui fait remonter les supports 9 sur le toit du véhicule, la rotation de la tige 55 entraîne l'écrou 56 en translation vers l'écrou 59 jusqu'à ce qu'il vienne en butée contre ce dernier lorsque les supports 9 sont en fin de course sur le toit du véhicule. Dans cette position l'écrou 56 est bloqué, comme dans sa position précédente, de sorte que l'axe de rotation 6 ne peut tourner dans le sens qui déroule les sangles 5.

Ce dispositif de verrouillage assure donc la sécurité contre tout déroulement intempestif des sangles.

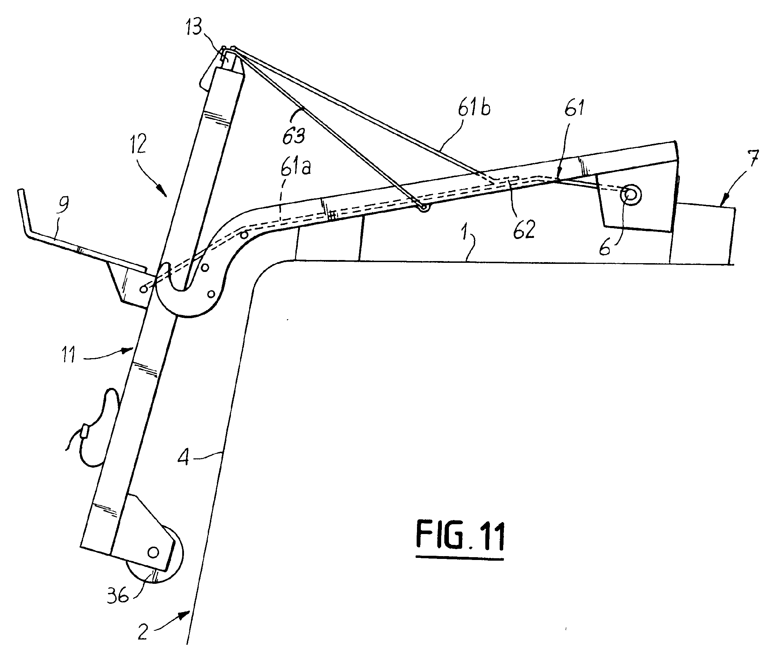

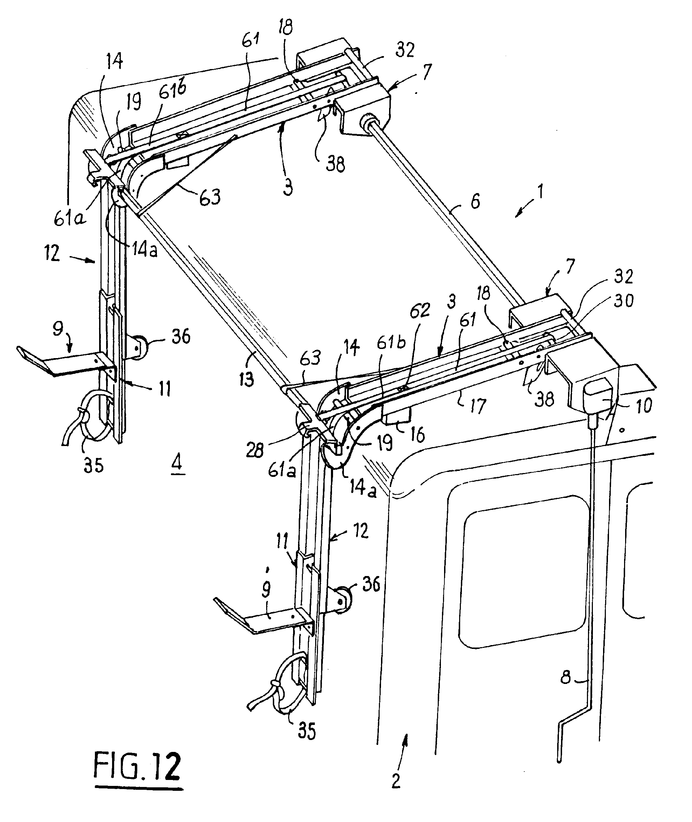

Dans la forme de réalisation de l'appareil illustrée aux Fig.11 et 12, chaque paire de liens 5, 40 est remplacée par un lien souple unique 61 subdivisé, à un emplacement approprié, en deux brins 61a et 61b. Le premier brin 61a a son extrémité fixée au chariot correspondant 12 de la même manière que dans la réalisation précédente, tandis que le second brin 61b, plus court que le premier, a son extrémité fixée à la barre rigide 13 de liaison. Dans ces conditions les tambours d'enroulement 43 de la réalisation précédente sont ici supprimés, ce qui simplifie l'appareillage et en diminue le coût de fabrication.

Le point de jonction 62 des brins 61a et 61b doit bien entendu être convenablement choisi pour que le chariot 12 commence à basculer avant que ne soit atteint son point d'équilibre sur le rouleau 19a associé, lequel doit également être convenablement positionné à cet effet.

Selon une autre particularité, l'appareil des Fig.11 et 12 est équipé de petites sangles 63, de préférence élastiques, à raison d'une par glissière 3. Chaque petite sangle ou sanglette 63 est donc fixée d'une part à la glissière correspondante 3, de préférence dans sa zone médiane, et d'autre part à la barre rigide 13.

Ainsi, lorsque les chariots 12 coulissent sur les glissières 3 pour basculer vers leur position basse d'attente le long de la paroi du véhicule, les sanglettes élastiques 63 obligent la barre 13 et les extrémités des chariots 12 à venir s'enclencher dans les becs 14a des crochets 14 d'accrochage, en fin de descente des supports 9. Les sanglettes 63 évitent donc tout risque que les chariots 12 et la barre 13 ne sautent à l'extérieur des crochets 14 si le véhicule est en pente et en cas de descente trop rapide, ce qui améliore encore la sécurité d'utilisation de l'appareil.

Il est bien sûr possible d'utiliser les sangles uniques 61 et les sanglettes 63 ensemble comme représenté ou isolément, c'est-à-dire les sangles 61 sans les sanglettes 63 et inversement.

## Revendications

1. Appareil de manutention et de chargement d'objets allongés sur le toit (1) d'un véhicule, comprenant des glissières (3) adaptées pour être fixées aux extrémités avant et arrière du toit, des liens souples (5) prenant appui sur les glissières (3), pouvant s'enrouler autour d'un axe (6) monté longitudinalement sur le toit grâce à des moyens d'entraînement (10,8) de cet axe en rotation, et des supports (9) d'objets fixés aux extrémités des liens souples, solidaires de chariots (11) montés coulissants sur des tiroirs rigides (12) pouvant eux-mêmes coulisser sur lesdites glissières (3) caractérisé en ce que :
   a) les glissières (3) s'étendent transversalement jusqu'au niveau de l'une au moins des parois latérales (4) du véhicule,
   b) les parties terminales des glissières (3) opposées à l'axe de rotation sont munies de crochets (14) présentant des becs (14a) recourbés vers le haut,
   c) une barre longitudinale rigide (13) relie les extrémités des tiroirs (12) situées du coté de l'axe de rotation (6), et les extrémités de cette barre peuvent s'engager dans les becs (14a) d'accrochage de la barre, afin de retenir les tiroirs et les chariots suspendus le long de la paroi latérale (4) du véhicule en position basse d'attente.

2. Appareil selon la revendication 1, caractérisé en ce que deux liens souples (5,40) sont associés à chaque glissière (3), à savoir un premier lien souple (5) dont une extrémité est attachée au chariot correspondant (11) et un second lien souple (40) plus court, dont une extrémité est attachée à la barre de liaison (13), et ces deux liens (5,40) s'enroulent sur des tambours respectifs (44,43) dont les diamètres sont choisis afin d'assurer aux deux liens des vitesses d'enroulement et de déroulement synchronisées.

3. Appareil selon l'une des revendications 1 et 2, caractérisé en ce que les extrémités des tiroirs (12) situées du côté de l'axe de rotation (6) sont équipées de moyens pour solidariser le tiroir avec le chariot correspondant (11) avant chaque manoeuvre de montée du tiroir et de son chariot sur le toit (1) du véhicule (2), et pour les désolidariser lorsqu'ils sont rabattus le long de la paroi latérale (4) du véhicule.

4. Appareil selon la revendication 3, caractérisé en ce que lesdits moyens sont des loquets de verrouillage (28) articulés sur les extrémités de la barre de liaison (13) et qui viennent par gravité s'accrocher sur des organes associés (29) solidaires des extrémités des tiroirs (12), et les extrémités (14a) des crochets (16) recourbées vers le haut sont agencées pour provoquer un relèvement des loquets (28) lorsque la barre (13) s'engage dans les crochets (14), et par conséquent le déverrouillage automatique des chariots (11) par rapport aux tiroirs (12) durant une manoeuvre de descente de ceux-ci le long de la paroi du véhicule.

5. Appareil selon l'une des revendications 1 à 4, caractérisé en ce que les extrémités des tiroirs (12) situées du coté de l'axe de rotation (6) sont munies de pièces (31) de blocage de l'ensemble des tiroirs (12) et des chariots (11) sur les glissières en position chargée, par exemple des pièces profilées pour venir s'engager sous des barrettes de retenue (32) fixées transversalement aux extrémités supérieures des glissières (3).

6. Appareil selon l'une des revendications 1 à 5, caractérisé en ce que les tiroirs (12) présentent des évidements (23) dans lesquels peuvent passer les liens souples (5), dont les extrémités sont attachées aux chariots mobiles (12), et ces tiroirs sont munis de roulettes (36) d'appui sur la paroi latérale (4) du véhicule (2).

7. Appareil selon l'une des revendications 1 à 6, caractérisé en ce qu il comporte des moyens de roulement des chariots (11) sur les tiroirs (12), et des tiroirs sur les glissières (3) fixées au toit, et les tiroirs (12) sont pourvus de butées (20) d'arrêt des chariots (12) en position basse.

8. Appareil selon la revendication 7, caractérisé en ce que les moyens de roulement comprennent des galets (18,19,19a) montés dans les glissières (3), sur lesquels peuvent rouler les tiroirs correspondants (12) et prennent appui les liens souples (5) lorsque les tiroirs et leurs chariots (11) sont en position basse.

9. Appareil selon l'une des revendications 1 à 8, caractérisé en ce que les extrémités de l'axe de rotation (6) sont munies de cames (37) adaptées pour bloquer des crochets de sécurité (38) retenant les tiroirs (12) et les chariots (11) sur les glissières (3).

10. Appareil selon l'une des revendications 7 à 9, caractérisé en ce que les tiroirs (12) sont profilés pour loger des galets de roulement (26) montés sur les extrémités supérieures de chariots (11), et sont munis de galets (33) de roulement pour les chariots (11).

11. Appareil selon l'une des revendications 1 à 10, caractérisé en ce que l'intérieur des crochets (14) présente en section des rampes (41) d'accès en V, puis une gorge (42) de fond à parois opposées parallèles (42a), et les profils d'extrémités (13a) de la barre de liaison (13) comportent des plats opposés parallèles (13b) et sont dimensionnés afin de venir se loger pratiquement sans jeu dans les gorges correspondantes (42) des crochets (14).

12. Appareil selon l'une des revendications 1 à 11, caractérisé en ce qu'il est muni d'un dispositif pour verrouiller automatiquement les moyens d'entraînement de l'axe (6) en rotation lorsque les tiroirs (12) sont en position relevée sur les glissières (3) et en fin de course sur celles-ci, ou en position basse d'attente.

13. Appareil selon la revendication 12, caractérisé en ce que le dispositif de verrouillage automatique comporte un organe d'arrêt (46) d'un treuil (10) monté basculant sur un anneau rotatif (47) du treuil adapté pour recevoir l'extrémité (48) d'une tringle (8) d'entraînement en rotation, rappelé élastiquement dans une position où sa rotation est bloquée par une butée (49) fixée au boîtier du treuil (10), cet organe d'arrêt (46) pouvant être libéré de la butée (49) par introduction de l'extrémité (48) de la tringle (8) dans l'anneau (47).

14. Appareil selon la revendication 12, caractérisé en ce que le dispositif de verrouillage automatique comprend une tige filetée (55) prolongeant l'axe de manoeuvre d'un treuil (10) adapté pour recevoir l'extrémité (48) d'une tringle (8) d'entraînement en rotation, solidaire en rotation de cet axe, portant un écrou (56) bloqué en rotation par une gaine (57) dont la section correspond à celle de l'écrou, cet écrou (56) étant mobile en translation le long de la tige (55) pendant la manoeuvre du treuil de manière à être en position haute lorsque les supports (9) d'objets sont en position basse et inversement.

15. Appareil selon la revendication 1, caractérisé en ce qu'un lien souple unique (61) subdivisé en deux brins est associé à chaque glissière (3), le premier brin (61a) ayant son extrémité fixée au chariot correspondant (12) et le second brin (61b) plus court, ayant son extrémité fixée à la barre rigide (13) de liaison.

16. Appareil selon l'une quelconque des revendications 1 à 15, caractérisé en ce que des sangles (63) de préférence élastiques, sont fixées d'une part aux glissières (3) et d'autre part à la barre rigide (13) afin d'obliger cette dernière et les tiroirs (12) à s'enclencher dans les becs (14a) d'accrochage en fin de descente des supports (9).

**Patentansprüche**

1. Vorrichtung zum Halten und Laden von länglichen Gegenständen auf dem Dach (1) eines Fahrzeugs, mit Gleitschienen (3), die am vorderen und hinteren Ende des Daches befestigt werden können, biegsamen Bändern (5), die gegen die Gleitschienen (3) anliegen und auf eine Achse (6) aufgerollt werden können, die in Längsrichtung auf dem Dach montiert ist, mit Antriebseinrichtungen (10,8), die diese Achse in Drehrichtung antreiben, und mit Stützen (9) für Gegenstände, die an den Enden der biegsamen Bänder angebracht sind und fest mit Schlitten (11) verbunden sind, die verschiebbar auf starren Stangen (12) angeordnet sind, die ihrerseits auf den Gleitschienen (3) verschiebbar sind, dadurch **gekennzeichnet**, daß

a) die Gleitschienen (3) sich in Querrichtung bis zur Höhe wenigstens einer der seitlichen Wände (4) des Fahrzeugs erstrecken,
b) die Endstücke des Gleitschienen (3), die der Drehachse gegenüberliegen, mit Haken (14) versehend sind, die nach oben gekrümmte Mundstücke (14a) aufweisen,
c) eine starre, längsgerichtete Stange (13) die Enden der Stangen (12) auf der Seite der Drehachse (6) verbindet, und daß die Enden dieser Stange (13) in die Mundstücke (14a) zum Aufhängen der Stange eingreifen und damit die Stangen (12) und die Schlitten, die an der Seitenwand (4) des Fahrzeugs in einer niedrigen Bereitschaftsstellung aufgehängt sind, halten.

2. Vorrichtung nach Anspruch 1, dadurch **gekennzeichnet**, daß die beiden biegsamen Bänder (5,40) jeder Gleitstange (3) zugeordnet sind, daß ein erstes flexibles Band (5) vorgesehen ist, dessen eines Ende an dem entsprechenden Schlitten (11) angebracht ist, und ein zweites biegsames Band (40), das kürzer ist und dessen eines Ende an der Verbindungsstange (13) befestigt ist, und daß die beiden biegsamen Bänder (5,40) auf Trommeln (44,43) aufgerollt werden, deren Durchmesser derart gewählt sind, daß die Aufrollgeschwindigkeit und Abrollgeschwindigkeit der beiden Bänder synchronisiert ist.

3. Vorrichtung nach einem der Ansprüche 1 und 2, dadurch **gekennzeichnet**, daß die Enden der Stangen (12) auf der Seite der Drehachse (6) mit Verbindungseinrichtungen zum Verbinden mit dem entsprechenden Schlitten (11) vor jedem Anheben der Stange und des Zugehörigen Schlittens auf dem Dach (1) des Fahrzeugs (2) versehen sind, die die Schlitten freigeben, wenn diese entlang den Seitenwänden (4) des Fahrzeugs heruntergeklappt sind.

4. Vorrichtung nach Anspruch 3, dadurch **gekennzeichnet**, daß die Einrichtung Verriegelungs-Klinken (28) umfaßt, die an den Enden der Verbindungsstange (13) gelenkig gelagert sind und die durch Schwerkraft in die zugehörigen Organe (29) einhaken, die fest mit den Enden der Stangen verbunden sind, und daß die Enden (14a) der nach oben gekrümmten Haken (14) eine Anhebung der Klinken (28) hervorrufen, wenn die Stange (13) mit den Haken in Eingriff tritt, und damit eine automatische Entriegelung der Schlitten (11) in bezug auf die Stangen (12) währen des Herablassens der Stangen entlang der Wand des Fahrzeugs hervorrufen.

5. Vorrichtung nach einem der Ansprüche 1 bis 4, dadurch **gekennzeichnet**, daß die Enden der Stangen (12) auf der Seite der Drehachse (6) mit Blockiergliedern (31) versehen sind, die die Anordnung aus Stangen (12) und Schlitten (11) auf den Gleitschienen in der beladenen Stellung blockieren, beispielsweise profilierte Bauteile, die mit Haltestäben (32) in Eingriff treten, die in Querrichtung auf den oberen Enden der Gleitschienen (3) befestigt sind.

6. Vorrichtung nach einem der Ansprüche 1 bis 5, dadurch **gekennzeichnet**, daß die Stangen (12) Ausnehmungen (23) aufweisen, in denen die biegsamen Bänder (5) laufen können, an deren Enden die beweglichen Schlitten (11) angebracht sind, und daß die Stangen mit Rollen (36) versehen sind, die sich an den seitlichen Wänden (4) des Fahrzeugs (2) abstützen.

7. Vorrichtung nach einem der Ansprüche 1 bis 6, dadurch **gekennzeichnet**, daß die Vorrichtung Einrichtungen zum Abrollen der Schlitten (11) auf den Stangen (12) und der Stange auf den Gleitschienen (13) umfaßt, die auf dem Dach befestigt sind, und daß die Stangen (12) mit Anschlägen (20) für die Schlitten (11) in der unteren Position versehen sind.

8. Vorrichtung nach Anspruch 7, dadurch **gekennzeichnet**, daß diese Rolleinrichtungen Laufrollen (18,19,19a) aufweisen, die in den Gleitschienen (3) angeordnet sind und auf denen die entsprechenden Stangen (12) abrollen können und die gegen die biegsamen Bänder (5) anliegen, wenn die Stangen und ihre Schlitten (11) in der unteren Position sind.

9. Vorrichtung nach einem der Ansprüche 1 bis 8, dadurch **gekennzeichnet**, daß die Enden der Drehachse (6) mit Nocken (37) versehen sind, die es gestatten, Sicherheitshaken (38) zu blockieren, die die Stangen (12) und die Schlitten (11) auf den Gleitschienen (3) halten.

10. Vorrichtung nach einem der Ansprüche 7 bis 9, dadurch **gekennzeichnet**, daß die Stangen (12) profiliert sind und damit Laufrollen (26) aufnehmen, die an den oberen Enden der Schlitten (11) angebracht sind, sowie mit Laufrollen (33) für die Schlitten (11) versehen sind.

11. Vorrichtung nach einem der Ansprüche 1 bis 10, dadurch **gekennzeichnet**, daß im Inneren der Haken (14) Einlaßrampen in V-Form vorgesehen sind, daß eine bodenseitige Nut (42) mit parallelen gegenüberliegenden Wänden (42a) folgt, und daß die Endprofile (13a) der Verbindungsstange (13) parallele gegenüberliegende Platten (13b) aufweisen, die so dimensioniert sind, daß sie praktisch spielfrei in den entsprechenden Nuten (42) der Haken (14) liegen können.

12. Vorrichtung nach einem der Ansprüche 1 bis 11, dadurch **gekennzeichnet**, daß die Vorrichtung mit einer Einrichtung zum automatischen Verriegeln der Antriebseinrichtung der Drehachse (6) versehen ist, die in Funktion tritt, wenn die Stangen (12) in der angehobenen Position auf den Gleitschienen (3) liegen und die Bewegung auf diesen beendet ist oder in der unteren Bereitschaftsposition.

13. Vorrichtung nach Anspruch 12, dadurch **gekennzeichnet**, daß die automatische Verriegelungseinrichtung ein Rastorgan (46) einer Hubeinrichtung (10) umfaßt, das pendelnd auf einem drehbaren Ring (47) der Hubeinrichtung angeordnet ist, der das Ende einer Rotations-Antriebsstange aufnimmt, welches Rastorgan elastisch in eine Position vorgespannt ist oder dessen Drehung durch einen Anschlag (49) blockiert ist, der am Gehäuse der Hubeinrichtung (10) angebracht ist, welches Rastorgan (46) von dem Anschlag (49) freikommt durch Einführen des Endes der Antriebsstange (8) in den Ring (47).

**14.** Vorrichtung nach Anspruch 12, dadurch **gekennzeichnet**, daß die automatische Verriegelungseinrichtung eine Gewindespindel (55) umfaßt, die die Antriebsachse der Hubeinrichtung (10) verlängert und ein Ende (48) einer Rotations-Antriebsstange (8) aufnimmt, die drehfest mit diese Achse verbunden ist, welche Gewindespindel eine Mutter (56) aufnimmt, die in Drehrichtung durch ein Gehäuse (57) festgelegt ist, dessen Querschnitt demjenigen der Mutter entspricht, welche Mutter (56) in Längsrichtung der Gewindespindel (55) während der Betätigung der Hubeinrichtung derart beweglich ist, daß sie in der oberen Position liegt, wenn die Stützen (9) des Gegenstandes in der unteren Position liegen, und umgekehrt.

**15.** Vorrichtung nach Anspruch 1, dadurch **gekennzeichnet**, daß nur ein biegsames Band (61) vorgesehen ist, das in zwei Zweige unterteilt ist, und das jeweils einer Gleitschiene (3) zugeordnet ist, und daß der erste Zweig (61a) mit seinem Ende an dem entsprechenden Schlitten (11) befestigt ist, und der zweite Zweig (61b), der kürzer ist, mit einem Ende an der starren Verbindungsstange (13) angebracht ist.

**16.** Vorrichtung nach einem der Ansprüche 1 bis 15, dadurch **gekennzeichnet**, daß vorzugsweise elastische Gurtbänder (63) einerseits an den Gleitschienen (3) und andererseits an der starren Stange (13) angebracht sind, die die letzteren und die Stangen (12) in die Mitnahme-Mundstücke (14a) am Ende der Abstiegsbewegung der Stützen (9) einklinken.

## Claims

1) Device for handling and loading long objects on the roof (1) of a vehicle, comprising slide rails (3) adapted to be fixed to the front and rear ends of the roof, flexible straps (5) resting on the slide rails (3), which can wind around a spindle (6) mounted longitudinally on the roof due to actuating means (10,8) of this rotating spindle, and supports (9) for objects fixed to the ends of the flexible straps, integral with carriages (11) mounted so as to slide on rigid slides (12) which can themselves slide on the said slide rails (3) characterized in that:
a) the slide rails (3) extend transversally up to the level of at least one of the side walls (4) of the vehicle,
b) the end parts of the slide rails (3) opposite the rotating spindle are fitted with hooks (14) which have lips (14a) curved upwards,
c) a rigid longitudinal bar (13) connects the ends of the slides (12) situated alongside the rotating spindle (6), and the ends of this bar can engage in the lips (14a) for hooking the bar, in order to retain the slides and the carriages suspended along the side wall (4) of the vehicle in the lowered resting position.

2) Device according to claim 1, characterized in that two flexible straps (5,40) are attached to each slide rail (3), namely a first flexible strap (5) one end of which is attached to the corresponding carriage (11) and a second shorter flexible strap (40), one end of which is attached to the link bar (13), and these two straps (5,40) wind on respective wheels (44,43) the diameters of which are chosen so as to provide the two straps with synchronized winding and unwinding speeds.

3) Device according to one of claims 1 and 2, characterized in that the ends of the slides (12) situated alongside the rotating spindle (6) are equipped with means of locking the slide with the corresponding carriage (11) before each movement of raising the slide and its carriage on to the roof (1) of the vehicle (2), and of unlocking them when they are lowered again along the side wall (4) of the vehicle.

4) Device according to claim 3, characterized in that the said means are locking catches (28) articulated on the ends of the link bar (13) and which hook by gravity on the associated elements (29) integral with the ends of the slides (12), and the ends (14a) of the hooks (16) which are curved upwards are arranged so as to cause the catches (28) to be raised when the bar (13) engages in the hooks (14), and consequently the carriages (11) are automatically unlocked from the slides (12) during a downwards movement of the latter along the wall of the vehicle.

5) Device according to one of claims 1 to 4, characterized in that the ends of the slides (12) situated alongside the rotating spindle (6) are provided with fittings (31) for locking the set of slides (12) and carriages (11) on the slide rails in the loaded position, for example fittings shaped to fit under small retaining bars (32) fixed transversally at the upper ends of the slide rails (3).

6) Device according to one of claims 1 to 5, characterized in that the slides (12) have recesses (23) through which the flexible straps (5) can pass, the ends of which are attached to the mobile carriages (11), and these slides are provided with small wheels (36) resting on the side wall (4) of the vehicle (2).

7) Device according to one of claims 1 to 6, characterized in that it comprises means of rolling the carriages (11) on the slides (12), and the slides on the slide rails (3) fixed to the roof, and the slides (12) are fitted with end stops (20) for the carriages (11) in the lowered position.

8) Device according to claim 7, characterized in that the rolling means comprise rollers (18,19,19a) mounted in the slide rails (3), on which the corresponding slides (12) can roll, and rest on the flexible straps (5) when the slides and their carriages (11) are in the lowered position.

9) Device according to one of claims 1 to 8, characterized in that the ends of the rotating spindle (6) are fitted with cams (37) adapted to lock the safety hooks (38) retaining the slides (12) and the carriages (11) on the slide rails (3).

10) Device according to one of claims 7 to 9, characterized in that the slides (12) are shaped so as to house the rollers (26) mounted on the upper ends of the carriages (11), and are fitted with rollers (33) for the carriages (11).

11) Device according to one of claims 1 to 10, characterized in that the inside of the hooks (14) has, in section, v-shaped sloping accesses (41), then a bottom groove (42) with parallel opposing walls (42a), and the end profiles (13a) of the link bar (13) comprise parallel flat sides (13b) and their size is such that they fit in the corresponding grooves (42) of the hooks (14) with almost no play.

12) Device according to one of claims 1 to 11, characterized in that it is fitted with a device for automatically locking the means for actuating the rotating spindle (6) when the slides (12) are in the raised position on the slide rails (3) and at the end of the run of the latter, or in the lowered rest position.

13) Device according to claim 12, characterized in that the automatic locking device comprises a stop element (46) of a winch (10) mounted so as to tilt on a rotatable ring (47) of the winch adapted to receive the end (48) of a rotating actuation rod (8), returned elastically to a position where its rotation is blocked by a stop (49) fixed to the housing of the winch (10), this stop element (46) being able to be freed from the stop (49) by the introduction of the end (48) of the rod (8) into the ring (47).

14) Device according to claim 12, characterized in that the automatic locking device comprises a threaded rod (55) extending the axis of movement of a winch (10) adapted to receive the end (48) of a rotating actuation rod (8), rotationally integral with this axis, carrying a nut (56) rotationally blocked by a casing (57) whose section corresponds to that of the nut, this nut (56) being mobile in translation along the rod (55) during the movement of the winch so as to be in the upper position when the object supports (9) are in the lowered position and vice versa.

15) Device according to claim 1, characterized in that a single flexible strap (61) subdivided into two strands is attached to each slide rail (3), the first strand (61a) having its end fixed to the corresponding carriage (12) and the shorter, second strand (61b) having its end fixed to the rigid link bar (13).

16) Device according to any one of claims 1 to 15, characterized in that straps (63), preferably flexible, are fixed on the one hand to the slide rails (3) and on the other hand to the rigid bar (13) in order to force the latter and the slides (12) to interlock with the lips (14a) of the hook at the end of the downwards movement of the supports (9).

FIG.1

**FIG. 2**

**FIG. 2A**

FIG. 3

FIG. 4

FIG.5

# FIG.6

EP 0 340 076 B1

# FIG.7

# FIG.8

# FIG.9

# FIG.10

FIG. 11

EP 0 340 076 B1

FIG.12